# EUROPÄISCHE PATENTSCHRIFT

(11) **EP 1 811 206 B1**
(45) Veröffentlichungstag und Bekanntmachung des Hinweises auf die Patenterteilung: **17.02.2010**
(21) Anmeldenummer: 06025805.0
(22) Anmeldetag: 13.12.2006
(51) Int. Cl.: F16H 61/30, F16H 59/04, F15B 7/00

(54) **Schalteinrichtung für Schaltgetriebe**
Shift device for a manual transmission
Dispositif de changement de vitesse pour un boîte de vitesse manuelle

(30) Priorität: 15.12.2005 DE 102005059867
(43) Veröffentlichungstag der Anmeldung: 25.07.2007
(73) Patentinhaber: GM Global Technology Operations, Inc., Detroit, MI 48265-3000 (US)
(72) Erfinder: Wittorf, Marten, 55218 Ingelheim (DE)
(74) Vertreter: Strauss, Peter

(56) Entgegenhaltungen:
- EP-A- 0 211 171
- DE-A1- 10 338 777
- US-A- 2 079 684
- US-A- 2 373 745

## Beschreibung

Die vorliegende Erfindung liegt auf dem technischen Gebiet der Getriebetechnik und betrifft genauer eine Schalteinrichtung für ein Schaltgetriebe nach dem Oberbegriff von Anspruch 1, wie aus der EP 0 211 171 A1 bekannt.

In herkömmlichen Kraftfahrzeugen mit einem Schaltgetriebe (Wechselgetriebe) muss die Schaltbewegung des im Fahrzeuginnern befindlichen und am Fahrzeugaufbau gelagerten Schalthebels auf das meist am Motor und daher am Chassis gelagerte Schaltgetriebe übertragen werden.

Zur Kraftübertragung zwischen dem Schalthebel und dem Schaltgetriebe wird beispielsweise ein Schaltgestänge mit einer mit dem Schalthebel und mit dem Schaltgetriebe gekoppelten Schaltstange eingesetzt. Gewöhnlich ist die Schaltstange hierbei, je nach Fahrzeugtyp, mit ein oder zwei Schaltwellen des Schaltgetriebes verbunden. Dabei wird üblicher Weise bei einer zur Fahrzeuglängsrichtung senkrechten Seitwärtsbewegung des Schalthebels die Schaltstange um ihre Längsachse verdreht, wodurch die Ganggassen vorgewählt werden können, während durch eine zur Fahrzeuglängsrichtung parallelen Vorwärts-/Rückwärtsbewegung des Schalthebels die Schaltstange in axialer Richtung verschoben wird, wodurch die Gänge des Schaltgetriebes geschaltet werden können.

Alternativ zur Verwendung eines Schaltgestänges ist auch die Verwendung von Seilzügen zur Kraftübertragung zwischen dem Schalthebel und dem Schaltgetriebe bekannt, welche in entsprechender Weise auf die eine oder beide Schaltwellen des Schaltgetriebes einwirken.

Erfolgt die Kraftübertragung zwischen Schalthebel und Schaltgetriebe mithilfe eines Schaltgestänges, so ist dafür Sorge zu tragen, dass die Bewegungen des Motorgetriebeblocks relativ zum Fahrzeugaufbau nicht auf den Schalthebel übertragen werden, da ansonsten Vibrationsbewegungen am Schalthebel auftreten, die vom Fahrer als äußerst unangenehm empfunden werden. Eine solche Gestaltung des Schaltgestänges erfordert jedoch technisch aufwändige Anlenkungen der Schaltstange an das Schaltgetriebe, so dass ein solches Schaltgestänge unter zusätzlicher Berücksichtigung der Bewegungsbahn der Schaltstange vergleichsweise viel Bauraum erfordert.

In den modernen Kraftfahrzeugen steht jedoch aufgrund der zunehmenden Bauteildichte der Bauteile immer weniger Bauraum mit möglicherweise komplizierter Bauraumgeometrie für den Kraftübertragungsmechanismus zwischen Schalthebel und Schaltgetriebe zur Verfügung, so dass die Verwendung eines Schaltgestänges unpraktisch sein kann.

Weniger problematisch in dieser Hinsicht ist der Einsatz von Seilzügen, die in engem Bauraum und bei komplizierter Bauraumgeometrie verlegt werden können. Jedoch ist auch der Verwendung von Seilzügen Grenzen gesetzt, da Seilzügen nur begrenzte Biegeradien auferlegt werden können, wenn ein übermäßiger Verschleiß vermieden werden soll. Zudem verschlechtert sich die Effizienz von Seilzügen, wenn diese sehr hohe Biegeradien haben.

Allgemein sind bei einer Schaltkraftübertragung mittels Schaltgestänge oder Seilzügen vergleichsweise viele Bauteile erforderlich, so dass die diesbezüglichen Material- und Fertigungskosten relativ hoch sind.

Demgegenüber besteht die Aufgabe der vorliegenden Erfindung darin, eine Schalteinrichtung für ein Schaltgetriebe zur Verfügung zu stellen, mit welcher die genannten und weitere Nachteile herkömmlichen Kraftübertragungsmechanismen zur mechanischen Übertragung der Schaltkraft zwischen Schalthebel und Schaltgetriebe vermieden werden können. Insbesondere soll eine solche Schalteinrichtung technisch einfach und kostengünstig in Herstellung und Einbau sein und auch bei vergleichsweise geringem Bauraum mit komplizierter Bauraumgeometrie eingesetzt werden können. Hierbei soll vor allem auch eine Kraftübertragung in Bauräumen die ansonsten enge Biegeradien von Seilzügen erfordern würden, realisierbar sein.

Diese Aufgabe wird nach dem Vorschlag der Erfindung durch eine Schalteinrichtung für ein Schaltgetriebe mit den Merkmalen des unabhängigen Anspruchs gelöst. Vorteilhafte Ausgestaltungen der Erfindung sind durch die Merkmale der Unteransprüche angegeben.

Eine erfindungsgemäße Schalteinrichtung für ein Schaltgetriebe, insbesondere Wechselgetriebe, umfasst einen Schalthebel und einen mechanischen Schaltkraftübertragungsmechanismus zur Übertragung der Schaltkraft des Schalthebels auf das Schaltgetriebe, wobei der Schaltkraftübertragungsmechanismus mit dem Schalthebel und dem Schaltgetriebe derart gekoppelt ist, dass durch den Schaltkraftübertragungsmechanismus die Ganggassen vorgewählt und die Gänge des Schaltgetriebes geschaltet werden können. Mit anderen Worten, durch den Schaltkraftübertragungsmechanismus kann das Schaltgetriebe durch Betätigen des Schalthebels geschaltet werden.

Die erfindungsgemäße Schalteinrichtung besitzt ferner einen Schaltkraftübertragungsmechanismus, mit der die Schaltkraftübertragung hydraulisch, d. h. mittels Änderung des Fluiddrucks eines Hydraulikfluids, erfolgt.

Eine solche hydraulische Schaltkraftübertragung hat den Vorteil, dass sie mit vergleichsweise wenigen und technisch einfachen Bauteilen zu realisieren und demzufolge preisgünstig herzustellen ist. Zudem ermöglicht eine hydraulische Kraftübertragung eine weitgehend freie Gestaltung der Geometrie der Kraftübertragungsstrecke, so dass auch Kraftübertragungsstrecken, welche bei Seilzügen enge Biegeradien erfordern würden, in einfacher Weise ohne Gefahr eines übermäßigen Verschleißes realisiert werden können.

Weiterhin umfasst der hydraulische Schaltkraftübertragungsmechanismus der erfindungsgemäßen Schalteinrichtung wenigstens zwei Hydraulikkammern, von denen jede einen von einer Wandstruktur begrenzten Innenraum aufweist, der zur Aufnahme von Hydraulikfluid, beispielsweise Öl, dient. Die Wandstruktur einer jeden Hydraulikkammer ist hierbei mit wenigstens einem verformbaren Wandabschnitt versehen, wobei die verformbaren Wandabschnitte jeweils so mit dem Schalthebel gekoppelt sind, dass sie durch Bewegungen des Schalthebels verformt werden können. Die verformbaren Wandabschnitte der Hydraulikkammern dienen somit zur mechanischen Kopplung des Schalthebels mit den Hydraulikkammern, wobei durch den Schalthebel eine Druckänderung in eine jeweilige Hydraulikkammer eingekoppelt werden kann.

In einer bevorzugten Ausführungsform in Gestalt einer technisch einfachen und preisgünstigen Realisierung einer solchen Kopplung zwischen Schalthebel und Hydraulikkammern ist ein - wie gewöhnlich - in einem Kugelgelenk schwenkbar gelagerter Schalthebel mit einem, beispielsweise am Schalthebelarm angebrachten, insbesondere plattenförmigen Schaltelement versehen, welches so angeordnet ist, das bei einer Bewegung des Schalthebels die verformbaren Wandabschnitte der Hydraulikkammern durch das Schaltelement verformt werden können.

Weiterhin sind die Hydraulikkammern mit wenigstens zwei hydraulischen Stellgliedern, wie hydraulische Stellzylinder mit hydraulisch verschiebbarem Kolben, hydraulisch gekoppelt.

Unter "hydraulischer Kopplung" soll hier und im Weiteren eine mechanische Kopplung verstanden sein, die in allgemeiner Weise auf der Kraftübertragung durch Fluiddruck basiert, ohne dass notwendiger Weise eine fluidleitende Verbindung zwischen den hydraulisch gekoppelten Elementen vorliegt.

Durch eine Verformung des verformbaren Wandabschnitts einer Hydraulikkammer wird eine Druckänderung des Fluiddrucks in dieser Hydraulikkammer (und den damit hydraulisch gekoppelten Elementen) bewirkt, sofern der Innenraum der Hydraulikkammer durch eine im Wesentlichen nicht-dehnbare Wandstruktur begrenzt ist. Eine Wandstruktur wird im Sinne der Erfindung als im Wesentlichen nicht-dehnbar angesehen, wenn bei den in der praktischen Anwendung der Erfindung gewöhnlicherweise auftretenden Kräften eine Dehnung der Wandstruktur nicht oder praktisch nicht auftritt.

Um eine hydraulische Kopplung zwischen den Hydraulikkammern und den hydraulischen Stellgliedern zu realisieren, können die mit Hydraulikfluid befüllten Innenräume der Hydraulikkammern fluidleitend mit den hydraulischen Stellgliedern verbunden sein, so dass sich bei einer Änderung des Fluiddrucks in einer Hydraulikkammer durch Änderung der Fluidmenge auch der Fluiddruck im hydraulischen Stellglied ändert bzw. eine Stellungsänderung des hydraulischen Stellglieds erreicht wird. Alternativ hierzu ist es auch möglich, dass eine Druckänderung von Hydraulikfluid in einer Hydraulikkammer mittels eines verformbaren Wandabschnitts aus der Hydraulikkammer ausgekoppelt und mittels eines damit mechanisch gekoppelten verformbaren Wandabschnitts in das hydraulische Stellglied eingekoppelt wird.

Genauer bewirkt die mechanische Kopplung zwischen den verformbaren Wandabschnitten, dass eine Verformung des verformbaren Wandabschnitts der Hydraulikkammer eine entsprechende Verformung des verformbaren Wandabschnitts des hydraulischen Stellglieds herbeiführt. Im Allgemeinen genügt es für eine ausreichende mechanische Kopplung der beiden verformbaren Wandabschnitte, wenn die beiden verformbaren Wandabschnitte einander anliegen bzw. mit hinreichend geringem Abstand zwischen ihnen angeordnet sind, so dass eine Verformung des einen verformbaren Wandabschnitts auf den anderen verformbaren Wandabschnitt übertragen werden kann.

Die Wandstruktur einer Hydraulikkammer ist zur Einkopplung einer Druckänderung mittels des Schalthebels mit einem verformbaren Wandabschnitt und gegebenenfalls zur Auskopplung einer Druckänderung mit einem weiteren verformbaren Wandabschnitt versehen. Gleichermaßen ist es auch möglich, dass die Wandstruktur einer Hydraulikkammer insgesamt verformbar ist und somit an jeder Stelle zur Ein- bzw. Auskopplung von Druckänderungen dienen kann.

Bei einer vorteilhaften Ausgestaltung der Erfindung sind die mit dem Schalthebel zusammenwirkenden Hydraulikkammern unter Zwischenschaltung von weiteren Druckübertragungskammern mit den hydraulischen Stellgliedern hydraulisch gekoppelt.

Erfindungsgemäß ist vorgesehen, dass diese Druckübertragungskammern jeweils einen mit Hydraulikfluid befüllten Innenraum aufweisen, der von einer Wandstruktur begrenzt ist. Zur Einkopplung einer Druckänderung ist die den Innenraum einer Druckübertragungskammer begrenzende Wandstruktur mit wenigstens einem verformbaren Wandabschnitt versehen.

Gleichermaßen ist es auch möglich, dass die Wandstruktur einer Druckübertragungskammer insgesamt verformbar ist und somit an jeder Stelle zur Ein- bzw. Auskopplung von Druckänderungen dienen kann.

Erfindungsgemäß erfolgt ferner eine Einkopplung einer Druckänderung von einer Hydraulikkammer in eine Druckübertragungskammer durch eine mechanische Kopplung des verformbaren Wandabschnitts der Hydraulikkammer und des verformbaren Wandabschnitts der Druckübertragungskammer.

Hierbei können die beiden verformbaren Wandabschnitte zu deren mechanischen Kopplung einander anliegen oder mit einem hinreichend geringen Abstand zwischen ihnen angeordnet sein, so dass eine Verformung des einen verformbaren Wandabschnitts eine Verformung des anderen verformbaren Wandabschnitts bewirkt. Auf diese Weise ist eine Hydraulikkammer mit einer Druckübertragungskammer mittels der verformbaren Wandabschnitte bzw. Wandstrukturen hydraulisch gekoppelt.

Durch eine Verformung des verformbaren Wandabschnitts bzw. der verformbaren Wandstruktur einer Druckübertragungskammer wird eine Druckänderung des Fluiddrucks in der Druckübertragungskammer (und den damit hydraulisch gekoppelten Elementen) bewirkt, sofern der Innenraum der Druckübertragungskammer durch eine nicht-dehnbare Wandstruktur begrenzt ist.

Um eine hydraulische Kopplung zwischen der Druckübertragungskammer und den hydraulischen Stellgliedern zu realisieren, können die mit Hydraulikfluid befüllten Innenräume der Druckübertragungskammer fluidleitend mit den hydraulischen Stellgliedern verbunden sein, so dass sich bei einer Änderung des Fluiddrucks in einer Hydraulikkammer durch Änderung der Fluidmenge der Fluiddruck im hydraulischen Stellglied ändert bzw. eine Stellungsänderung des hydraulischen Stellglieds herbei geführt wird.

Erfindungsgemäß ist vorgesehen, dass eine Druckänderung von Hydraulikfluid in einer Druckübertragungskammer mittels eines verformbaren Wandabschnitts aus der Druckübertragungskammer ausgekoppelt wird und mittels eines damit mechanisch gekoppelten, verformbaren Wandabschnitts in das hydraulische Stellglied eingekoppelt wird.

Vorteilhaft ist hierbei für jede Hydraulikkammer eine separate Druckübertragungskammer angeordnet.

Jede solche Druckübertragungskammer kann ihrerseits mit einer weiteren Druckübertragungskammer hydraulisch gekoppelt sein, wobei in diesem Fall ein verformbarer Wandabschnitt der einen Druckübertragungskammer mit einem verformbaren Wandabschnitt einer angrenzenden Druckübertragungskammer mechanisch gekoppelt ist. Eine solche Aneinanderreihung von Druckübertragungskammern kann insbesondere vorteilhaft bei engem Bauraum insbesondere mit einer komplizierten Bauraumgeometrie eingesetzt werden. Gleichermaßen ist es hierbei auch möglich, dass die Druckübertragungskammern jeweils von einer insgesamt verformbaren Wandstruktur begrenzt sind.

In einem solchen hydraulisch gekoppelten Schaltkraftübertragungsmechanismus mit wenigstens zwei Hydraulikkammern, gegebenenfalls weiteren Druckübertragungskammern, und wenigstens zwei hydraulischen Stellgliedern, bilden die Innenräume für das Hydraulikfluid ein geschlossenes System, so dass eine Änderung eines Fluiddrucks des Hydraulikfluids übertragen werden kann. So führt eine Verformung eines verformbaren Wandabschnitts einer Hydraulikkammer zu einer Druckerhöhung bzw. Druckverminderung in dieser Hydraulikkammer und in den damit hydraulisch gekoppelten Elementen, je nachdem, ob das Volumen des Innenraums der Hydraulikkammer durch die Verformung des verformbaren Wandabschnitts vermindert oder erhöht wird. Diese Druckänderung des Hydraulikfluids in der Hydraulikkammer wird schließlich auf das hydraulische Stellglied übertragen, welches mit dieser Hydraulikkammer hydraulisch gekoppelt ist.

Die hydraulischen Stellglieder sind mit dem Getriebeeingang, insbesondere in typischer Gestaltung des Getriebeeingangs mit einer oder beiden Schaltwellen, des Schaltgetriebes gekoppelt, um eine Vorwahl der Ganggassen und ein Schalten der Gänge des Schaltgetriebes zu bewirken.

Die Anzahl der Hydraulikkammern hängt davon ab, wie viele Ganggassen, Gänge oder Schaltebenen bzw. zusätzliche Reduktionsstufen in dem Schaltgetriebe zu bedienen sind. Bei einer vorteilhaften Ausgestaltung der Erfindung sind vier Hydraulikkammern vorgesehen, welche mit dem Schalthebel zusammenwirken. Durch vier Hydraulikkammern ist ein 5- oder 6-Gangschaltgetriebe mit zusätzlichem Rückwärtsgang in einfacher Weise zu realisieren. Vorteilhaft sind diese vier Hydraulikkammern jeweils mit einer separaten Druckübertragungskammer hydraulisch gekoppelt (druckgekoppelt). Diese vier Hydraulikkammern bzw. Druckübertragungskammern sind vorteilhaft mit zwei hydraulischen Stellgliedern hydraulisch gekoppelt, welcher ihrerseits mit dem Getriebeeingang gekoppelt sind.

Ein 5- oder 6-Gangschaltgetriebe ist mit zusätzlichem Rückwärtsgang, insbesondere für ein Kraftfahrzeug, mit vier Hydraulikkammern so auslegbar, dass die Schaltkräfte immer durch Überdruck übertragen werden. Unterdruck tritt entweder gar nicht oder nur temporär auf, so dass die Gefahr des Kollabierens von Leitungen/Anschlüssen, sowie des Ansaugens von Wasser, Luft oder Verunreinigungen nicht vorhanden ist.

Lediglich der Vollständigkeit halber soll hier erwähnt werden, dass ein 5- oder 6-Gangschaltgetriebe mit zusätzlichem Rückwärtsgang auch mit zwei Hydraulikkammern auslegbar ist, wenn zur Übermittlung der Schaltkräfte auch Unterdruck eingesetzt wird.

Um eine Schwingungs- und Geräuschdämpfung zu erreichen, können die Hydraulik- und/oder Druckübertragungskammern mit Mitteln zur Schwingungs- und/oder Geräuschdämpfung, wie hydraulische Drosseln und dergleichen, versehen sein, um hierdurch den Komfort für die Fahrzeuginsassen zu erhöhen.

Ferner kann in der erfindungsgemäßen Schalteinrichtung der hydraulische Schaltkraftübertragungsmechanismus auch mit einem Servomechanismus zur Verstärkung des Fluiddrucks versehen sein, wodurch der Schaltvorgang für den Fahrer erleichtert wird.

In besonders vorteilhafter Weise ist die erfindungsgemäße Schalteinrichtung in Modulbauweise herstellbar. So können Schalthebel, Hydraulikkammern, Druckübertragungskammern (falls vorhanden), und die hydraulischen Stellglieder in einem einzigen Modul integriert werden, welches dann in einfacher Weise in den zur Verfügung stehenden Bauraum insbesondere eines Kraftfahrzeugs eingesetzt und mit dem Getriebeeingang gekoppelt werden kann. Alternativ können die Hydraulikkammern in einem separaten "Hydraulikkammermodul" und die Druckübertragungskammern in einem separaten "Drück-übertragungskammermodul" aufgenommen sein. In diesem Fall werden Schalthebel, Hydraulikkammermodul, Druckübertragungskammermodul und die hydraulischen Stellglieder als jeweils separate Module in den Bauraum eingebaut. Selbstverständlich ist es auch möglich, das Hydraulikkammermodul und das Druckübertragungskammermodul, gegebenenfalls zusammen mit den hydraulischen Stellgliedern, als ein gemeinsames Modul zu formen.

Die Erfindung erstreckt sich ferner auf ein Kraftfahrzeug, welches mit einer wie oben beschriebenen Schalteinrichtung ausgerüstet ist.

Die Erfindung wird nun anhand eines Ausführungsbeispiels näher erläutert, wobei Bezug auf die beigefügten Zeichnungen genommen wird. Es zeigen
- Fig. 1: in einer schematischen Darstellung den grundlegenden Aufbau einer Ausführungsform einer erfindungsgemäßen Schalteinrichtung mit einem hydraulischen Schaltkraftübertragungsmechanismus;
- Fig. 2A bis Fig. 2C: in einer schematischen Darstellung den Schalthebel und das Hydraulikkammermodul der Schalteinrichtung von Fig. 1 bei verschiedenen Schaltvorgängen.

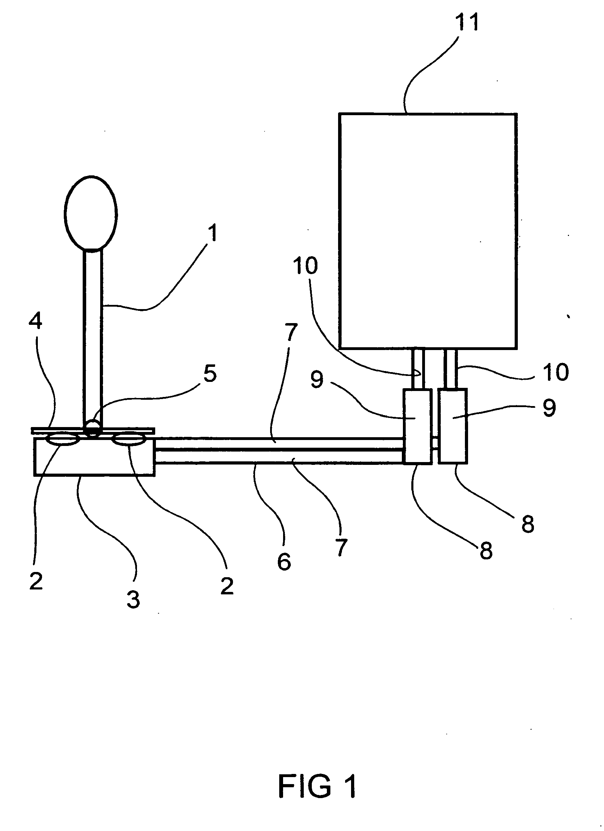

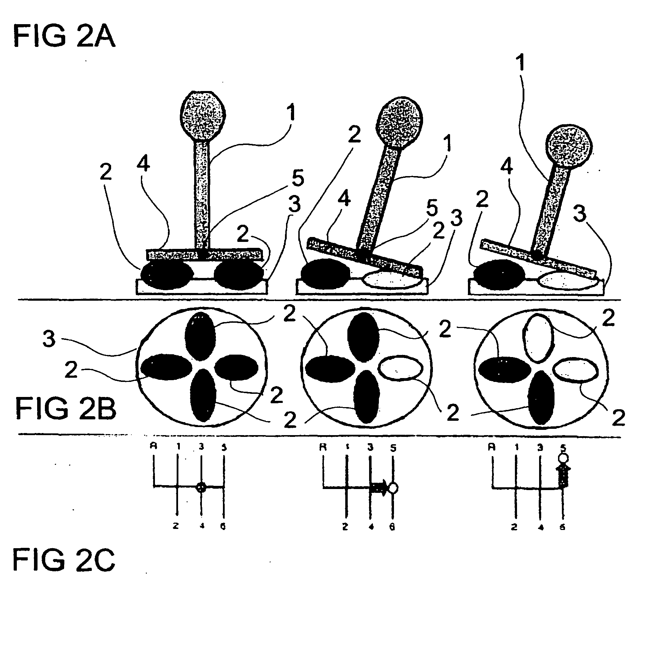

Zunächst wird Bezug auf Figur 1 genommen, worin in einer schematischen Darstellung der grundlegende Aufbau einer Ausführungsform einer erfindungsgemäßen Schalteinrichtung mit einem hydraulischen Schaltkraftübertragungsmechanismus dargestellt ist. Demnach umfasst die dargestellte Ausführungsform der erfindungsgemäßen Schalteinrichtung einen Schalthebel 1 mit Schaltknauf und Hebelstange, welcher über ein Kugelgelenk 5 an einer Hydraulikeinheit 3 angelenkt ist. Der Schalthebel 1 ist mittels des Kugelgelenks 5 in vier Raumrichtungen bewegbar. Die Hydraulikeinheit 3 ist mit vier Hydraulikkammern 2 versehen, welche jeweils einen mit Hydraulikfluid gefüllten Innenraum haben, der von einer verformbaren und praktisch nicht-dehnbaren Wandstruktur begrenzt ist. Von den vier Hydraulikkammern sind jeweils zwei Hydraulikkammern in einer gegenüberliegenden Position angeordnet, während die anderen beiden Hydraulikkammern in einer hierzu orthogonalen Position angeordnet sind (siehe auch Fig. 2A und 2B).

Am Fuß des Schalthebels 1 ist weiterhin eine Schaltplatte 4 angebracht, welche so angeordnet ist, dass diese bei einer Bewegung des Schalthebels 1 auf die Hydraulikkammern 2 drücken kann, um diese zu verformen. Der Schalthebel 1 und die Hydraulikeinheit 3 sind gemeinsam in einem separaten Modul ausgeführt.

Die Hydraulikkammern 2 sind ihrerseits über eine nicht näher dargestellte Druckkopplung mit Druckübertragungskammern 7 hydraulisch gekoppelt. Eine solche Druckkopplung erfolgt dadurch, dass die verformbare Wandstruktur der Hydraulikkammern 2 einem, in Figur 1 nicht näher dargestellten, verformbaren Wandabschnitt der jeweiligen Druckübertragungskammern 7 anliegt. Hierdurch kann beispielsweise eine Ausbauchung infolge einer Druckerhöhung des Hydraulikfluids in einer der Hydraulikkammern 2 in einfacher Weise auf die Druckübertragungskammern übertragen werden. Im gezeigten Ausführungsbeispiel sind die Druckübertragungskammern als ein druckstabiler Formschlauch 6 in Mehrkammer-Ausführung ausgebildet. Dieser Formschlauch bildet ein separates Modul und wird entweder form-/materialschlüssig mit den korrespondierenden Anschlusselementen angeliefert oder bei Bedarf mit einem oder mehreren Schnellverschluss-Verbindungen ("Quick-Connect") ausgestattet, wodurch Montage und Service in einfacher Weise ermöglicht sind.

Der Formschlauch 6 ist weiterhin mit hydraulischen Stellgliedern 8 in Form von hydraulischen Zylindern 9 mit Kolben 10 hydraulisch verbunden. Zu diesem Zweck sind die Innenräume der Druckübertragungskammern 7 des Mehrkammer-Formschlauchs 6 fluidleitend mit den hydraulischen Zylindern 9 verbunden.

Weiterhin sind die hydraulischen Stellglieder 8 mit einem Getriebeeingang eines Schaltgetriebes 11 gekoppelt, was in Fig. 1 nicht näher dargestellt ist. Typischer Weise sind die hydraulischen Stellglieder 8 zu diesem Zweck mit einer oder zwei Schaltwellen des Schaltgetriebes 11 verbunden, um hierdurch die Ganggassen vorzuwählen und die Gänge zu schalten.

Es wird nun Bezug auf Figuren 2A - 2C genommen, worin in einer schematischen Darstellung der Schalthebel und das Hydraulikkammermodul der Schalteinrichtung von Fig. 1 bei verschiedenen Schaltvorgängen dargestellt ist. Demnach zeigt Fig. 2A den Schalthebel 1 in drei verschiedenen Stellungen, nämlich in einer neutralen Nullstellung (links), in einer Stellung, bei der der Schalthebel nach seitwärts rechts gekippt ist (Mitte) und in einer Stellung, bei der der Schalthebel nach seitwärts rechts und zusätzlich nach vorne gekippt ist (rechts).

Wie Fig. 2B entnommen werden kann, entspricht die Nullstellung des Schalthebels 1 einer Position, bei der keine der Hydraulikkammern von dem Schalthebel 1 verformt wird, so dass keine Druckänderung in die Hydraulikkammern eingekoppelt wird. In Fig. 2C, worin die Position des Schalthebels im Schaltbild dargestellt ist, entspricht dies einer neutralen Mittelposition im Bereich der zweiten Ganggasse zwischen dem 3. und 4. Gang.

Andererseits entspricht die in Fig. 2A mittig dargestellte Position des Schalthebels 1 einer Position, bei welcher die in Aufsicht rechte Hydraulikkammer (in Fig. 2A und 2B hell dargestellt) durch den Schalthebel 1 verformt wird, so dass eine Druckerhöhung in der Hydraulikkammer auftritt, welche über den Mehrkammer-Formschlauch 6 an die hydraulischen Stellglieder 8 übertragen wird. Im Schaltdiagramm von Fig. 2C entspricht dies einer Vorwahl der dritten Schaltgasse zum Schalten des 5. und 6. Gangs.

Weiterhin entspricht die in Fig. 2A rechts dargestellte Position des Schalthebels 1 einer Position, bei welcher die in Aufsicht rechte und obere Hydraulikkammern (in Fig. 2A und 2B hell dargestellt) durch den Schalthebel 1 verformt werden, so dass eine Druckerhöhung in diesen Hydraulikkammern auftritt, welche über den Mehrkammer-Formschlauch 6 an die hydraulischen Stellglieder 8 übertragen wird. Im Schaltdiagramm von Fig. 2C entspricht dies einem Schalten des 5. Gangs.

In analoger Weise können alle anderen Gänge, nämlich der 1., 2., 3., 4. und 6. Gang des dargestellten Schaltgetriebes geschaltet werden. Der Rückwärtsgang des Schaltgetriebes kann geschaltet werden, indem die in Aufsicht linke Hydraulikkammer stärker belastet wird als die obere Hydraulikkammer der Hydraulikkammereinheit 3. Bei einem Schalten in den 1. Gang wird die in Aufsicht obere Hydraulikkammer gleich oder stärker belastet als die linke Hydraulikkammer der Hydraulikkammereinheit 3.

### Bezugszeichenliste

- 1: Schalthebel
- 2: Hydraulikkammer
- 3: Hydraulikkammereinheit
- 4: Schaltplatte
- 5: Kugelgelenk
- 6: Mehrkammer-Formschlauch
- 7: Druckübertragungskammer
- 8: hydraulisches Stellglied
- 9: Zylinder
- 10: Kolben
- 11: Schaltgetriebe

## Patentansprüche

1. Schalteinrichtung für ein Schaltgetriebe (11), welche einen Schalthebel (1) und einen Schaltkraftübertragungsmechanismus zur Übertragung der Schaltkraft des Schalthebels (1) auf das Schaltgetriebe (11) umfasst, wobei der Schaltkraftübertragungsmechanismus mit dem Schalthebel (1) und dem Schaltgetriebe (11) derart gekoppelt ist, dass durch Betätigung des Schalthebels das Schaltgetriebe geschaltet werden kann, wobei in dem Schaltkraftübertragungsmechanismus die Schaltkraftübertragung hydraulisch erfolgt, wobei der hydraulische Schaltkraftübertragungsmechanismus wenigstens zwei Hydraulikkammern (2) umfasst, welche jeweils mit einem von einer Wandstruktur begrenzten und mit einem Hydraulikfluid befüllten Innenraum versehen sind, wobei die Wandstrukturen der Hydraulikkammern (2) jeweils wenigstens einen verformbaren Wandabschnitt aufweisen, der so mit dem Schalthebel (1) zusammenwirkt, dass der Wandabschnitt durch ein Verschwenken des Schalthebels (1) verformt werden kann, und wobei der hydraulische Schaltkraftübertragungsmechanismus wenigstens zwei mit den Hydraulikkammern (2) hydraulisch gekoppelte hydraulische Stellglieder (8) umfasst, die so mit dem Schaltgetriebe (11) zusammenwirken, dass das Schaltgetriebe (11) geschaltet werden kann, und wobei der hydraulische Schaltkraftübertragungsmechanismus mit den Hydraulikkammern (2) hydraulisch gekoppelte, zur Übertragung von Fluiddruck geeignete Druckübertragungskammern (7) umfasst, die jeweils zwischen eine Hydraulikkammer (2) und ein hydraulisches Stellglied (8) geschaltet sind, und wobei die Druckübertragungskammern (7) jeweils einen mit Hydraulikfluid befüllten Innenraum aufweisen, der von einer Wandstruktur begrenzt ist, die mit wenigstens einem verformbaren Wandabschnitt versehen ist, **dadurch gekennzeichnet, dass** eine Einkopplung einer Druckänderung von einer Hydraulikkammer (2) in einer Druckübertragungskammer (7) durch eine mechanische Kopplung des verformbaren Wandabschnitts der Hydraulikkammer (2) und des verformbaren Wandabschnitts der Druckübertragungskammer (7) erfolgt, und wobei eine Druckänderung von Hydraulikfluid in einer Druckübertragungskammer (7) mittels eines verformbaren Wandabschnitts aus der Druckübertragungskammer (7) ausgekoppelt wird und mittels eines damit mechanisch gekoppelten, verformbaren Wandabschnitts in das hydraulische Stellglied (8) eingekoppelt wird.

2. Schalteinrichtung nach Anspruch 1, **dadurch gekennzeichnet, dass** die Wandstruktur der Druckübertragungskammer (7) insgesamt verformbar ist.

3. Schalteinrichtung nach einem der Ansprüche 1 bis 2, **gekennzeichnet durch** vier Hydraulikkammern (2).

4. Schalteinrichtung nach einem der Ansprüche 1 bis 3, **gekennzeichnet durch** ein mit dem Schalthebel (1) verschwenkbares, plattenförmiges Element (4), welches so angeordnet ist, dass hierdurch die verformbaren Wandabschnitte der Hydraulikkammern (2) verformt werden können.

5. Schalteinrichtung nach einem der vorhergehenden Ansprüche, **dadurch gekennzeichnet, dass** der hydraulische Schaltkraftübertragungsmechanismus mit einem Mittel zur Schwingungs- und/oder Geräuschdämpfung des Hydraulikfluids versehen ist.

6. Schalteinrichtung nach einem der vorhergehenden Ansprüche, **dadurch gekennzeichnet, dass** der hydraulische Schaltkraftübertragungsmechanismus mit einem Servomechanismus zur Verstärkung des Fluiddrucks versehen ist.

7. Schalteinrichtung nach einem der vorhergehenden Ansprüche, **gekennzeichnet durch** einen modularen Aufbau der Schalteinrichtung.

8. Schalteinrichtung nach Anspruch 7, **dadurch gekennzeichnet, dass** die Hydraulikkammern (2) und die Druckübertragungskammern (7) jeweils in einem separaten Modul aufgenommen sind.

9. Kraftfahrzeug, welches mit einer Schalteinrichtung nach einem der vorhergehenden Ansprüche ausgerüstet ist.

## Claims

1. A gearshift device for a manual transmission (11), comprising a gearshift lever (1) and a shifting-force transmission mechanism for transmitting the shifting force of the gearshift lever (1) onto the manual transmission (11), with the shifting-force transmission mechanism being coupled with the gearshift lever (1) and the manual transmission (11) in such a way that by actuating the gearshift lever the manual transmission can be shifted, with the transmission of shifting force occurring in a hydraulic manner in the shifting-force transmission mechanism, with the hydraulic shifting-force transmission mechanism comprising at least two hydraulic chambers (2) which are each provided with a cavity which is delimited by a wall structure and is filled with a hydraulic fluid, with the wall structures of the hydraulic chambers (2) each comprising at least one deformable wall section which cooperates with the gearshift lever (1) in such a way that the wall section can be deformed by a pivoting of the gearshift lever (1), and with the hydraulic shifting-force transmission mechanism comprising at least two hydraulic actuating members (8) which are coupled hydraulically with the hydraulic chambers (2) and which cooperate with the manual transmission (11) in such a way that the manual transmission (11) can be shifted, and with the hydraulic shifting-force transmission mechanism comprises pressure transfer chambers (7) which are coupled with the hydraulic chambers (2) and are suitable for transferring fluid pressure and are each switched between a hydraulic chamber (2) and a hydraulic actuator (8), and with the pressure transfer chambers (7) each comprising a cavity which is filled with hydraulic fluid and is delimited by a wall structure which is provided with at least one deformable wall section, **characterized in that** an introduction of a pressure change from a hydraulic chamber (2) to a pressure transfer chamber (7) occurs by a mechanical coupling of the deformable wall section of the hydraulic chamber (2) and the deformable wall section of the pressure transfer chamber (7), and with a pressure change of hydraulic fluid in a pressure transfer chamber (7) being removed by means of a deformable wall section from the pressure transfer chamber (7) and being introduced into the hydraulic actuating member (8) by means of a deformable wall section which is mechanically coupled with the same.

2. A gearshift device according to claim 1, **characterized in that** the wall structure of the pressure transfer chamber (7) is deformable in its entirety.

3. A gearshift device according to one of the claims 1 to 2, **characterized by** four hydraulic chambers (2).

4. A gearshift device according to one of the claims 1 to 3, **characterized by** a plate-like element (4) which is swivelable with the gearshift lever (1) and which is arranged in such a way that the deformable wall sections of the hydraulic chambers (2) can be deformed thereby.

5. A gearshift device according to one of the preceding claims, **characterized in that** the hydraulic shifting-force transmission mechanism is provided with a means for damping oscillations and/or noises of the hydraulic fluid.

6. A gearshift device according to one of the preceding claims, **characterized in that** the hydraulic shifting-force transmission mechanism is provided with a servo mechanism for amplifying the fluid pressure.

7. A gearshift device according to one of the preceding claims, **characterized by** a modular configuration of the gearshift device.

8. A gearshift device according to claim 7, **characterized in that** the hydraulic chambers (2) and the pressure transfer chambers (7) are each accommodated in a separate module.

9. A motor vehicle which is equipped with a gearshift device according to one of the preceding claims.

## Revendications

1. Dispositif de changement de rapport pour une boîte de vitesses (11), comprenant un levier de changement de rapport (1) et un mécanisme de transmission de l'effort de changement de rapport pour la transmission de l'effort du levier de changement de rapport (1) à la boîte de vitesses (11), dans lequel le mécanisme de transmission de l'effort de changement de rapport est couplé avec le levier de changement de rapport (1) et la boîte de vitesses (11) de telle façon que l'actionnement du levier de changement de rapport permet d'actionner la boîte de vitesses, dans lequel la transmission de l'effort dans le mécanisme de transmission de l'effort de changement de rapport s'effectue de manière hydraulique, dans lequel le mécanisme hydraulique de transmission de l'effort de changement de rapport comprend au moins deux chambres hydrauliques (2) qui possèdent chacune un espace intérieur délimité par une structure de paroi et rempli d'un fluide hydraulique, les structures de paroi des chambres hydrauliques (2) possédant chacune au moins une partie de paroi déformable qui coopère avec le levier de changement de rapport (1) de telle façon que la partie de paroi peut être déformée par le basculement du levier de changement de rapport (1), et dans lequel le mécanisme hydraulique de transmission de l'effort de changement de rapport comprend au moins deux actionneurs hydrauliques (8) couplés aux chambres hydrauliques (2), qui coopèrent avec la boîte de vitesses (11) de telle façon que la boîte de vitesses (11) peut être actionnée, et dans lequel le mécanisme hydraulique de transmission de l'effort de changement de rapport comprend des chambres de transmission de la pression (7) en couplage hydraulique avec les chambres hydrauliques (2) et permettant la transmission de la pression de fluide, qui sont montées chacune entre une chambre hydraulique (2) et un actionneur hydraulique (8), et dans lequel les chambres de transmission de la pression (7) présentent chacune un espace intérieur rempli de fluide hydraulique qui est délimité par une structure de paroi munie d'au moins une partie de paroi déformable,
**caractérisé en ce qu'**une transmission d'un changement de pression d'une chambre hydraulique (2) à une chambre de transmission de la pression (7) est réalisée par un couplage mécanique de la partie de paroi déformable de la chambre hydraulique (2) et de la partie de paroi déformable de la chambre de transmission de la pression (7), un changement de pression du fluide hydraulique dans une chambre de transmission de la pression (7) étant découplé de la chambre de transmission de la pression (7) au moyen d'une partie de paroi déformable et transmis à l'élément de réglage hydraulique (8) au moyen d'une partie de paroi déformable en couplage mécanique avec celui-ci.

2. Dispositif de changement de rapport selon la revendication 1, **caractérisé en ce que** la structure de paroi de la chambre de transmission de la pression (7) est déformable dans son ensemble.

3. Dispositif de changement de rapport selon l'une des revendications 1 à 2, **caractérisé en ce qu'**il comporte quatre chambres hydrauliques (2).

4. Dispositif de changement de rapport selon l'une des revendications 1 à 3, **caractérisé en ce qu'**il comporte un élément en forme de plaque (4) pouvant basculer avec le levier de changement de rapport (1), qui est disposé de telle façon qu'il peut déformer les parties déformables des chambres hydrauliques (2).

5. Dispositif de changement de rapport selon l'une des revendications précédentes, **caractérisé en ce que** le mécanisme hydraulique de transmission de l'effort de changement de rapport est muni d'un moyen d'amortissement des vibrations et/ou du bruit du fluide hydraulique.

6. Dispositif de changement de rapport selon l'une des revendications précédentes, **caractérisé en ce que** le mécanisme hydraulique de transmission de l'effort de changement de rapport est muni d'un servomécanisme pour renforcer la pression du fluide.

7. Dispositif de changement de rapport selon l'une des revendications précédentes, **caractérisé en ce que** le dispositif de changement de rapport a une structure modulaire.

8. Dispositif de changement de rapport selon la revendication 7, **caractérisé en ce que** les chambres hydrauliques (2) et les chambres de transmission de la pression (7) sont logées chacune dans un module séparé.

9. Véhicule à moteur équipé d'un dispositif de changement de rapport selon l'une des revendications précédentes.
